# EUROPEAN PATENT APPLICATION

(11) **EP 2 677 006 A1**
(43) Date of publication of application: **25.12.2013**
(21) Application number: 13172708.3
(22) Date of filing: 19.06.2013
(51) Int. Cl.: C08L 83/04, G02B 1/04, C08G 77/16, C08G 77/20, C08K 3/10, C08K 5/10

(54) **Silicone resin composition**

(30) Priority: 21.06.2012 JP 2012140059
(71) Applicant: NITTO DENKO CORPORATION, Ibaraki-shi, Osaka 567-8680 (JP)
(72) Inventor: Ona, Haruka, Osaka, 567-8680 (JP); Katayama, Hiroyuki, Osaka, 567-8680 (JP)
(74) Representative: HOFFMANN EITLE

(57) **Abstract**

A first silicone resin composition is prepared by allowing an organopolysiloxane containing silanol groups at both ends containing silanol groups at both ends of a molecule and a silicon compound containing, in one molecule, at least two leaving groups leaving by a condensation reaction with the silanol groups to undergo the condensation reaction in the presence of a condensation catalyst. The silicon compound contains a trifunctional silicon compound containing, in one molecule, the three leaving groups and a bifunctional silicon compound containing, in one molecule, the two leaving groups.

## Description

### BACKGROUND OF THE INVENTION

### Field of the Invention

The present invention relates to a silicone resin composition, to be specific, to a first silicone resin composition and a second silicone resin composition, and a third silicone resin composition containing the first and the second silicone resin compositions.

### Description of Related Art

As a resin composition having excellent light resistance and heat resistance, for example, a composition for a thermosetting silicone resin containing (1) an organopolysiloxane containing silanol groups at both ends, (2) an alkenyl group-containing trialkoxysilane, (3) an organohydrogensiloxane, (4) a condensation catalyst, and (5) a hydrosilylation catalyst has been proposed (ref: for example, Japanese Unexamined Patent Publication No. 2010-285593).

In Japanese Unexamined Patent Publication No. 2010-285593, first, (1) an organopolysiloxane containing silanol groups at both ends having an average molecular weight of 11,500, (2) an alkenyl group-containing trialkoxysilane, and (4) a condensation catalyst are blended to be stirred at room temperature (at 25°C) for two hours, so that an oil is prepared. Thereafter, (3) an organohydrogensiloxane and (5) a hydrosilylation catalyst are added to the prepared oil, so that a composition for a thermosetting silicone resin is produced.

### SUMMARY OF THE INVENTION

In Japanese Unexamined Patent Publication No. 2010-285593, however, when the prepared oil is stored under a high temperature atmosphere, there may be a case where the density of a siloxane bond (Si-O-Si) formed by a condensation reaction is excessively increased and the oil is gelated.

Furthermore, when a long time is required from the preparation of the oil until the blending of (3) an organohydrogensiloxane and (5) a hydrosilylation catalyst, there is a disadvantage that the viscosity of the composition for a thermosetting silicone resin is increased immediately after the blending of (3) an organohydrogensiloxane and (5) a hydrosilylation catalyst.

It is an object of the present invention to provide a first silicone resin composition and a second silicone resin composition in which the gelation is suppressed, and a third silicone resin composition in which the thickening is suppressed.

A first silicone resin composition of the present invention is prepared by allowing an organopolysiloxane containing silanol groups at both ends containing silanol groups at both ends of a molecule and a silicon compound containing, in one molecule, at least two leaving groups leaving by a condensation reaction with the silanol groups to undergo the condensation reaction in the presence of a condensation catalyst, wherein the silicon compound contains a trifunctional silicon compound containing, in one molecule, the three leaving groups and a bifunctional silicon compound containing, in one molecule, the two leaving groups.

In the first silicone resin composition of the present invention, it is preferable that the molar ratio of the leaving group in the trifunctional silicon compound to the leaving group in the bifunctional silicon compound is 30/70 to 90/10.

In the first silicone resin composition of the present invention, it is preferable that the condensation catalyst is a tin-based catalyst.

In the first silicone resin composition of the present invention, it is preferable that the trifunctional silicon compound and/or the bifunctional silicon compound further contain(s), in one molecule, at least one monovalent ethylenically unsaturated hydrocarbon group.

A second silicone resin composition of the present invention is prepared by allowing an organopolysiloxane containing silanol groups at both ends containing silanol groups at both ends of a molecule and a silicon compound containing, in one molecule, at least two leaving groups leaving by a condensation reaction with the silanol groups to undergo the condensation reaction in the presence of a condensation catalyst, wherein the number average molecular weight of the organopolysiloxane containing silanol groups at both ends is 20,000 or more and 50,000 or less.

In the second silicone resin composition of the present invention, it is preferable that the condensation catalyst is a tin-based catalyst.

In the second silicone resin composition of the present invention, it is preferable that the silicon compound further contains, in one molecule, at least one monovalent ethylenically unsaturated hydrocarbon group.

A third silicone resin composition of the present invention contains the above-described first silicone resin composition and/or the above-described second silicone resin composition, an organohydrogenpolysiloxane, and a hydrosilylation catalyst, wherein the first silicone resin composition is prepared by allowing an organopolysiloxane containing silanol groups at both ends containing silanol groups at both ends of a molecule and a silicon compound containing, in one molecule, at least two leaving groups leaving by a condensation reaction with the silanol groups to undergo the condensation reaction in the presence of a condensation catalyst; and the silicon compound contains a trifunctional silicon compound containing, in one molecule, the three leaving groups and a bifunctional silicon compound containing, in one molecule, the two leaving groups and the second silicone resin composition is prepared by allowing an organopolysiloxane containing silanol groups at both ends containing silanol groups at both ends of a molecule and a silicon compound containing, in one molecule, at least two leaving groups leaving by a condensation reaction with the silanol groups to undergo the condensation reaction in the presence of a condensation catalyst; and the number average molecular weight of the organopolysiloxane containing silanol groups at both ends is 20,000 or more and 50,000 or less.

In the first and the second silicone resin compositions of the present invention, the density of the siloxane bond formed by the condensation reaction is adjusted to be relatively low, so that the gelation caused by the excessive increase in the density of the bond described above can be prevented.

When the organohydrogenpolysiloxane and the hydrosilylation catalyst are blended after a long elapse of time since the preparation of the first and the second silicone resin compositions of the present invention, the thickening of the third silicone resin composition immediately after the blending thereof can be suppressed.

As a result, the handling ability of the first to third silicone resin compositions can be improved.

### BRIEF DESCRIPTION OF THE DRAWINGS

FIG. 1 shows process drawings for preparing an encapsulating sheet obtained from one embodiment of a third silicone resin composition of the present invention:
   FIG. 1 (a) illustrating a step of preparing a release sheet and
   FIG. 1 (b) illustrating a step of forming the encapsulating sheet.
FIG. 2 shows process drawings for illustrating a method for encapsulating a light emitting diode element using the encapsulating sheet shown in FIG. 1 (b):
   FIG. 2 (a) illustrating a step of disposing the encapsulating sheet in opposed relation to a board and
   FIG. 2 (b) illustrating a step of encapsulating the light emitting diode element by the encapsulating sheet.
FIG. 3 shows process drawings for illustrating a method for encapsulating a light emitting diode element using one embodiment of a third silicone resin composition of the present invention:
   FIG. 3 (a) illustrating a step of preparing a board provided with a reflector and
   FIG. 3 (b) illustrating a step of potting the third silicone resin composition into the reflector to be subsequently semi-cured and completely cured to encapsulate the light emitting diode element by an encapsulating layer.
FIG. 4 shows process drawings for illustrating a method for encapsulating a light emitting diode element using an encapsulating sheet obtained from one embodiment of a third silicone resin composition of the present invention:
   FIG. 4 (a) illustrating a step of preparing the light emitting diode element supported by a support,
   FIG. 4 (b) illustrating a step of encapsulating the light emitting diode element by the encapsulating sheet,
   FIG. 4 (c) illustrating a step of peeling the encapsulating sheet and the light emitting diode element from the support,
   FIG. 4 (d) illustrating a step of disposing the encapsulating sheet and the light emitting diode element in opposed relation to a board, and
   FIG. 4 (e) illustrating a step of mounting the light emitting diode element on the board.

### DETAILED DESCRIPTION OF THE INVENTION

### <First Silicone Resin Composition>

A first silicone resin composition is prepared by allowing a condensation material to undergo a condensation reaction in the presence of a condensation catalyst.

The condensation material contains an organopolysiloxane containing silanol groups at both ends and a silicon compound.

The organopolysiloxane containing silanol groups at both ends is an organopolysiloxane containing silanol groups (SiOH groups) at both ends of a molecule and to be specific, is represented by the following general formula (1).
General Formula (1): 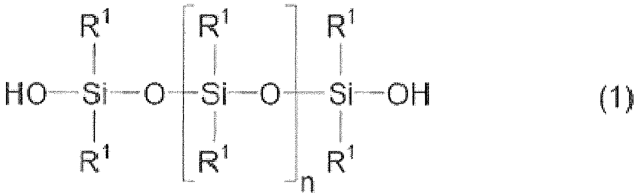 (where, in general formula (1), R¹ represents a monovalent hydrocarbon group selected from a saturated hydrocarbon group and an aromatic hydrocarbon group. "n" represents an integer of 1 or more.)

In the above-described general formula (1), in the monovalent hydrocarbon group represented by R¹, examples of the saturated hydrocarbon group include a straight chain or branched chain alkyl group having 1 to 6 carbon atoms (such as a methyl group, an ethyl group, a propyl group, an isopropyl group, a butyl group, an isobutyl group, a pentyl group, and a hexyl group) and a cycloalkyl group having 3 to 6 carbon atoms (such as a cyclopentyl group and a cyclohexyl group).

In the above-described general formula (1), in the monovalent hydrocarbon group represented by R¹, an example of the aromatic hydrocarbon group includes an aryl group having 6 to 10 carbon atoms (such as a phenyl group and a naphthyl group).

In the above-described general formula (1), R¹s may be the same or different from each other. Preferably, R¹s are the same.

As the monovalent hydrocarbon group, preferably, an alkyl group having 1 to 6 carbon atoms and an aryl group having 6 to 10 carbon atoms are used, more preferably, in view of transparency, thermal stability, and light resistance, a methyl group and a phenyl group are used, or further more preferably, a methyl group is used.

In the above-described general formula (1), "n" is preferably, in view of stability and/or handling ability, an integer of 1 to 10,000, or more preferably an integer of 1 to 1,000.

"n" in the above-described general formula (1) is calculated as an average value.

To be specific, examples of the polysiloxane containing silanol groups at both ends include a polydimethylsiloxane containing silanol groups at both ends, a polymethylphenylsiloxane containing silanol groups at both ends, and a polydiphenylsiloxane containing silanol groups at both ends.

These polysiloxanes containing silanol groups at both ends can be used alone or in combination.

Of the polysiloxanes containing silanol groups at both ends, preferably, a polydimethylsiloxane containing silanol groups at both ends is used.

A commercially available product can be used as the polysiloxane containing silanol groups at both ends. A polysiloxane containing silanol groups at both ends synthesized in accordance with a known method can be also used.

The number average molecular weight of the polysiloxane containing silanol groups at both ends is not particularly limited and is, in view of stability and/or handling ability, for example, 100 to 45,000, or preferably 200 to 20,000. The number average molecular weight is calculated by conversion based on standard polystyrene with a gel permeation chromatography (GPC). The detailed measurement conditions of the GPC are described in Examples to be described later. The number average molecular weight of materials, other than the organopolysiloxane containing silanol groups at both ends, to be described later, is also calculated in the same manner as described above.

The viscosity of the polysiloxane containing silanol groups at both ends at 25°C is, for example, 5 to 50,000 mPa·s, or preferably 10 to 15,000 mPa·s. The viscosity of the polysiloxane containing silanol groups at both ends is measured with an E-type viscometer (type of rotor: 1"34' × R24, number of revolutions of 10 rpm).

The mixing ratio of the organopolysiloxane containing silanol groups at both ends with respect to 100 parts by mass of the condensation material is, for example, 1 to 99.99 parts by mass, preferably 50 to 99.9 parts by mass, or more preferably 80 to 99.5 parts by mass.

The silicon compound contains, in one molecule, at least two leaving groups leaving by a condensation reaction with the silanol groups. Preferably, the silicon compound contains, in one molecule, at least two leaving groups leaving by a condensation reaction with the silanol groups and contains at least one monovalent ethylenically unsaturated hydrocarbon group. To be more specific, the silicon compound is represented by the following general formula (2).
General Formula (2):

R²ₘSiXₙA₄₋₍ₘ₊ₙ₎ (2)

(where, in formula, R² represents a monovalent ethylenically unsaturated hydrocarbon group; X represents a leaving group selected from a halogen atom, an alkoxy group, a phenoxy group, and an acetoxy group; and A represents a monovalent hydrocarbon group selected from a saturated hydrocarbon group and an aromatic hydrocarbon group. "m" represents 1 or 2 and "n" represents 2 or 3.)

In the above-described general formula (2), examples of the ethylenically unsaturated hydrocarbon group represented by R² include a substituted or unsubstituted ethylenically unsaturated hydrocarbon group. Examples thereof include an alkenyl group and a cycloalkenyl group.

An example of the alkenyl group includes an alkenyl group having 2 to 10 carbon atoms such as a vinyl group, an allyl group, a propenyl group, a butenyl group, a pentenyl group, a hexenyl group, a heptenyl group, and an octenyl group.

An example of the cycloalkenyl group includes a cycloalkenyl group having 3 to 10 carbon atoms such as a cyclohexenyl group and a norbornenyl group.

As the ethylenically unsaturated hydrocarbon group, in view of reactivity with a hydrosilyl group, preferably, an alkenyl group is used, more preferably, an alkenyl group having 2 to 5 carbon atoms is used, or particularly preferably, a vinyl group is used.

X in the above-described general formula (2) is a leaving group in the condensation reaction. SiX group in the above-described general formula (2) is a reactive functional group in the condensation reaction.

In the above-described general formula (2), examples of the halogen atom represented by X include a bromine atom, a chlorine atom, a fluorine atom, and an iodine atom.

In the above-described general formula (2), examples of the alkoxy group represented by X include an alkoxy group containing a straight chain or branched chain alkyl group having 1 to 6 carbon atoms (such as a methoxy group, an ethoxy group, a propoxy group, an isopropoxy group, a butoxy group, an isobutoxy group, a pentyloxy group, and a hexyloxy group) and an alkoxy group containing a cycloalkyl group having 3 to 6 carbon atoms (such as a cyclopentyloxy group and a cyclohexyloxy group).

In the above-described general formula (2), Xs may be the same or different from each other. Preferably, Xs are the same.

Of the Xs in the above-described general formula (2), preferably, an alkoxy group is used, or more preferably, a methoxy group is used.

In the above-described general formula (2), an example of the monovalent hydrocarbon group selected from the saturated hydrocarbon group and the aromatic hydrocarbon group represented by A includes the same monovalent hydrocarbon group as that illustrated in the above-described general formula (1).

To be specific, the silicon compound contains a trifunctional silicon compound that contains, in one molecule, three leaving groups and a bifunctional silicon compound that contains, in one molecule, two leaving groups.

In the trifunctional silicon compound, for example, "m" is 1 and "n" is 3 in the above-described general formula (2). That is, the trifunctional silicon compound contains one ethylenically unsaturated hydrocarbon group and three leaving groups. To be specific, the trifunctional silicon compound is represented by the following general formula (3).
General Formula (3):

R²SiX₃ (3)

(where, in formula, R² and X are the same as those in the above-described general formula (2).)

Examples of the trifunctional silicon compound include a trialkoxysilane containing an ethylenically unsaturated hydrocarbon group, a trihalogenated silane containing an ethylenically unsaturated hydrocarbon group, a triphenoxysilane containing an ethylenically unsaturated hydrocarbon group, and a triacetoxysilane containing an ethylenically unsaturated hydrocarbon group.

These silicon compounds can be used alone or in combination.

Of the silicon compounds, preferably, a trialkoxysilane containing an ethylenically unsaturated hydrocarbon group is used.

To be specific, examples of the trialkoxysilane containing an ethylenically unsaturated hydrocarbon group include a vinyltrialkoxysilane such as a vinyltrimethoxysilane, a vinyltriethoxysilane, and a vinyltripropoxysilane; an allyltrimethoxysilane; a propenyltrimethoxysilane; a butenyltrimethoxysilane; and a cyclohexenyltrimethoxysilane.

Of the trialkoxysilanes containing an ethylenically unsaturated hydrocarbon group, preferably, a vinyltrialkoxysilane is used, or more preferably, a vinyltrimethoxysilane is used.

The mixing ratio of the trifunctional silicon compound with respect to the silicon compound is, for example, 1 to 95 mass %, or preferably 20 to 90 mass %. In the mixing ratio of the trifunctional silicon compound, the trifunctional silicon compound is contained in the silicon compound so that the number of moles of the leaving group in the trifunctional silicon compound with respect to the total number of moles of the leaving group in the silicon compound is, for example, 5 to 95 %, or preferably 20 to 90 %.

In the bifunctional silicon compound, for example, "m" is 1 or 2 and "n" is 2 in the above-described general formula (2). That is, the bifunctional silicon compound contains one or two ethylenically unsaturated hydrocarbon group(s) and two leaving groups. To be specific, the bifunctional silicon compound is represented by the following general formula (4).
General Formula (4):

R²ₘSiX₂A₂₋ₘ (4)

(where, in formula, R², X, and A are the same as those in the above-described general formula (2). "m" represents 1 or 2.)

More preferably, the bifunctional silicon compound is represented by the following general formula (5).
General Formula (5):

R²SiX₂A (5)

(where, in formula, R², X, and A are the same as those in the above-described general formula (2).)

Examples of the bifunctional silicon compound include a dialkoxysilane containing an ethylenically unsaturated hydrocarbon group, a dialkoxyalkylsilane containing an ethylenically unsaturated hydrocarbon group, a dihalogenated silane containing an ethylenically unsaturated hydrocarbon group, an alkyldihalogenated silane containing an ethylenically unsaturated hydrocarbon group, a diphenoxysilane containing an ethylenically unsaturated hydrocarbon group, an alkyldiphenoxysilane containing an ethylenically unsaturated hydrocarbon group, a diacetoxysilane containing an ethylenically unsaturated hydrocarbon group, and an alkyldiacetoxysilane containing an ethylenically unsaturated hydrocarbon group.

These bifunctional silicon compounds can be used alone or in combination.

Of the bifunctional silicon compounds, preferably, a dialkoxyalkylsilane containing an ethylenically unsaturated hydrocarbon group is used.

Examples of the dialkoxyalkylsilane containing an ethylenically unsaturated hydrocarbon group include a vinyldialkoxymethylsilane such as a vinyldimethoxymethylsilane, a vinyldiethoxymethylsilane, and a vinyldipropoxymethylsilane; an allyldimethoxymethylsilane; a propenyldimethoxymethylsilane; a butenyldimethoxymethylsilane; and a cyclohexenyldimethoxymethylsilane.

Of the dialkoxyalkylsilanes containing an ethylenically unsaturated hydrocarbon group, preferably, a vinyldialkoxymethylsilane is used, or more preferably, a vinyldimethoxymethylsilane is used.

The mixing ratio of the bifunctional silicon compound with respect to the silicon compound is, for example, 5 to 99 mass %, or preferably 10 to 80 mass %. In the mixing ratio of the bifunctional silicon compound, the bifunctional silicon compound is contained in the silicon compound so that the number of moles of the leaving group in the bifunctional silicon compound with respect to the total number of moles of the leaving group in the silicon compound is, for example, 5 to 95 %, or preferably 10 to 80 %.

The molar ratio of the leaving group in the trifunctional silicon compound with respect to the leaving group in the bifunctional silicon compound is, for example, 30/70 to 90/10, or preferably 40/60 to 90/10.

When the above-described molar ratio is within the above-described range, the density of the siloxane bond (Si-O-Si) formed by the condensation reaction in the first silicone resin composition can be adjusted to be within an appropriate range.

The mixing ratio of the silicon compound with respect to 100 parts by mass of the condensation material is, for example, 0.01 to 90 parts by mass, preferably 0.01 to 50 parts by mass, or more preferably 0.01 to 10 parts by mass.

The mixing ratio of the total amount of the organopolysiloxane containing silanol groups at both ends and the silicon compound with respect to 100 parts by mass of the condensation material is, for example, 70 parts by mass or more, preferably 90 parts by mass or more, or more preferably 100 parts by mass.

The condensation catalyst is not particularly limited as long as it is a catalyst that promotes a condensation reaction of the organopolysiloxane containing silanol groups at both ends with the silicon compound. Examples of the condensation catalyst include an acid, a base, and a metal catalyst.

An example of the acid includes an inorganic acid (a Broensted acid) such as a hydrochloric acid, an acetic acid, a formic acid, and a sulfuric acid. The acid includes a Lewis acid and an example of the Lewis acid includes an organic Lewis acid such as pentafluorophenyl boron, scandium triflate, bismuth triflate, scandium trifurylimide, oxovanadium triflate, scandium trifurylmethide, and trimethylsilyl trifurylimide.

Examples of the base include an inorganic base such as potassium hydroxide, sodium hydroxide, and potassium carbonate and tetramethylammonium hydroxide (TMAH). Preferably, an organic base such as tetramethylammonium hydroxide is used.

Examples of the metal catalyst include an aluminum-based catalyst, a titanium-based catalyst, a zinc-based catalyst, and a tin-based catalyst. Preferably, a tin-based catalyst is used.

Examples of the tin-based catalyst include a carboxylic acid tin salt such as di (or bis)(carboxylic acid)tin (II) containing a straight chain or branched chain carboxylic acid having 1 to 20 carbon atoms including di(2-ethylhexanoate)tin (II) (also, called as 2-ethylhexanoate tin), dioctanoate tin (II) (dicaprylic acid tin (II)), bis(2-ethylhexanoate)tin, bis(neodecanoate)tin, and tin oleate and an organic tin compound such as dibutylbis(2,4-pentanedionate)tin, dimethyltindiversatate, dibutyltindiversatate, dibutyltindiacetate (dibutyldiacetoxytin), dibutyltindioctoate, dibutylbis(2-ethylhexylmaleate)tin, dioctyldilauryltin, dimethyldineodecanoatetin, dibutyltindioleate, dibutyltindilaulate, dioctyltindilaulate, dioctyltindiversatate, dioctyltinbis (mercaptoacetic acid isooctyl ester)salt, tetramethyl-1,3-diacetoxydistannoxane, bis(triethyltin)oxide, tetramethyl-1,3-diphenoxydistannoxane, bis(tripropyltin)oxide, bis(tributyltin)oxide, bis(tributyltin)oxide, bis(triphenyltin)oxide, poly(dibutyltin maleate), diphenyltindiacetate, dibutyltin oxide, dibutyltindimethoxide, and dibutylbis(triethoxy)tin.

As the tin-based catalyst, preferably, a carboxylic acid tin salt is used, more preferably, di(carboxylic acid)tin (II) containing a straight chain or branched chain carboxylic acid having 1 to 20 carbon atoms is used, further more preferably, di(carboxylic acid)tin (II) containing a straight chain or branched chain carboxylic acid having 4 to 14 carbon atoms is used, or particularly preferably, di(carboxylic acid)tin (II) containing a branched chain carboxylic acid having 6 to 10 carbon atoms is used.

These condensation catalysts can be used alone or in combination.

A commercially available product can be used as the condensation catalyst. A condensation catalyst synthesized in accordance with a known method can be also used.

Of the condensation catalysts, preferably, a metal catalyst (to be specific, a tin-based catalyst) is used. The metal catalyst, compared to a base, is capable of preventing occurrence of a hydrogen gas caused by a side reaction (a condensation reaction having an excessive progress) of the silicon compound with an organohydrogenpolysiloxane to be described later.

The condensation catalyst can be, for example, solved in a solvent to be prepared as a condensation catalyst solution. The concentration of the condensation catalyst in the condensation catalyst solution is adjusted to be, for example, 1 to 99 mass %.

An example of the solvent includes an organic solvent such as an alcohol including methanol and ethanol; a silicon compound including siloxane; an aliphatic hydrocarbon including hexane; an aromatic hydrocarbon including toluene; and ether including tetrahydrofuran (THF). An example of the solvent also includes an aqueous solvent such as water.

The mixing ratio of the condensation catalyst with respect to 100 mol of the organopolysiloxane containing silanol groups at both ends is, for example, 0.001 to 50 mol, or preferably 0.01 to 5 mol.

In order to allow the condensation material to undergo a condensation reaction in the presence of the condensation catalyst, the condensation material and the condensation catalyst are blended at the above-described mixing proportion.

In the above-described blending, the condensation material and the condensation catalyst may be simultaneously blended. Alternatively, first, the condensation material is blended and thereafter, the condensation catalyst is blended thereto.

After the blending of the above-described components, the mixture is stirred and mixed at a temperature of, for example, 0 to 150°C, preferably 10 to 100°C, or more preferably 25 to 80°C for, for example, 1 minute to 40 hours, or preferably 5 minutes to 5 hours.

By the above-described mixing, the organopolysiloxane containing silanol groups at both ends and the silicon compound are partially subjected to condensation in the presence of the condensation catalyst.

To be specific, a hydroxyl group in the organopolysiloxane containing silanol groups at both ends and a leaving group (X in the above-described general formula (2)) in the silicon compound are partially subjected to condensation.

To be more specific, as shown in the following formula (6), a hydroxyl group in the organopolysiloxane containing silanol groups at both ends, a leaving group (X in the above-described general formula (3)) in the trifunctional silicon compound, and a leaving group (X in the above-described general formulas (4) or (5)) in the bifunctional silicon compound are partially subjected to condensation.
Formula (6): 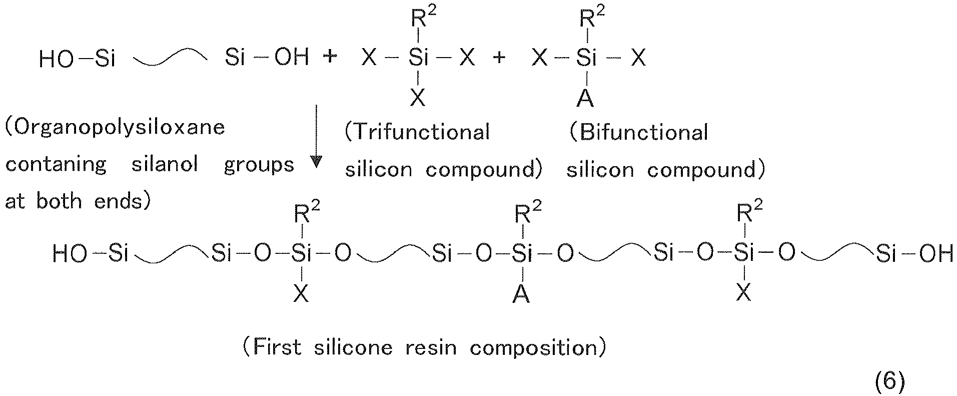 A portion in the silicon compound, to be specific, a portion in the trifunctional silicon compound and/or a portion in the bifunctional silicon compound are/is not subjected to condensation and remain(s) to be subjected to condensation with a hydrosilyl group in the organohydrogenpolysiloxane to be described later by next further condensation (a complete curing step).

The reaction rate of the condensation reaction at this time is, for example, 10 to 95 %, or preferably 20 to 90 %. The reaction rate is obtained as follows: a peak area (an initial value) of a leaving group (to be specific, a methoxy group) in the silicon compound in the first silicone resin composition by the time when the condensation catalyst is blended and the peak area (a value after the reaction) of the above-described leaving group after the elapse of a predetermined sampling time since the condensation catalyst is blended or a gelled leaving group, if it is gelated, are calculated, respectively with, for example, a 1H-NMR and then, a value, which is obtained by subtracting the value after the reaction from the initial value, is obtained as a percentage with respect to the initial value.

The first silicone resin composition is in a liquid state, to be specific, in an oil state (in a viscous liquid state). The viscosity (described in detail in Examples later) thereof under conditions of 25°C and one pressure is, for example, 100 to 100000 mPa·s, or preferably 1000 to 50000 mPa·s.

### <Second Silicone Resin Composition>

A second silicone resin composition is prepared by allowing a condensation material to undergo a condensation reaction in the presence of a condensation catalyst.

The condensation material contains an organopolysiloxane containing silanol groups at both ends and a silicon compound.

An example of the organopolysiloxane containing silanol groups at both ends includes the same organopolysiloxane containing silanol groups at both ends as that illustrated in the first silicone resin composition.

The organopolysiloxane containing silanol groups at both ends in the second silicone resin composition is represented by the above-described general formula (1) and in formula, "n" represents, for example, an integer of 1 or more, preferably an integer of 5 or more, or more preferably an integer of 10 or more, and is, for example, an integer of 1000 or less, or preferably an integer of 950 or less.

The number average molecular weight of the organopolysiloxane containing silanol groups at both ends is, for example, 15,000 or more, or preferably 20,000 or more, and is, for example, 50,000 or less, or preferably 45,000 or less.

When the number average molecular weight of the organopolysiloxane containing silanol groups at both ends is within the above-described range, the density of the siloxane bond (Si-O-Si) formed by the condensation reaction in the second silicone resin composition can be adjusted to be within an appropriate range.

The mixing ratio of the organopolysiloxane containing silanol groups at both ends with respect to 100 parts by mass of the condensation material is, for example, 1 to 99.99 parts by mass, preferably 50 to 99.9 parts by mass, or more preferably 80 to 99.5 parts by mass.

The silicon compound is not particularly limited and examples thereof include the above-described trifunctional silicon compound and bifunctional silicon compound. Preferably, the trifunctional silicon compound is used. These silicon compounds can be used alone or in combination of two or more. Preferably, the trifunctional silicon compound is used alone.

The mixing ratio of the silicon compound with respect to 100 parts by mass of the condensation material is, for example, 0.01 to 90 parts by mass, preferably 0.01 to 50 parts by mass, or more preferably 0.01 to 10 parts by mass.

The mixing ratio of the total amount of the organopolysiloxane containing silanol groups at both ends and the silicon compound with respect to 100 parts by mass of the condensation material is, for example, 70 parts by mass or more, preferably 90 parts by mass or more, or more preferably 100 parts by mass.

An example of the condensation catalyst includes the same condensation catalyst as that illustrated in the first silicone resin composition. The mixing proportion of the condensation catalyst is the same as that of the first silicone resin composition.

In order to allow the condensation material to undergo a condensation reaction in the presence of the condensation catalyst, the condensation material and the condensation catalyst are blended (mixed) at the above-described mixing proportion.

After the blending of the above-described components, the mixture is stirred and mixed at a temperature of, for example, 0 to 150°C, or preferably 10 to 100°C, for, for example, 1 minute to 24 hours, or preferably 5 minutes to 5 hours.

By the above-described mixing, the organopolysiloxane containing silanol groups at both ends and the silicon compound are partially subjected to condensation in the presence of the condensation catalyst.

To be specific, as shown in the following formula (7), the hydroxyl group in the organopolysiloxane containing silanol groups at both ends and the leaving group (X in the above-described general formula (3)) in the trifunctional silicon compound are partially subjected to condensation.
Formula (7): 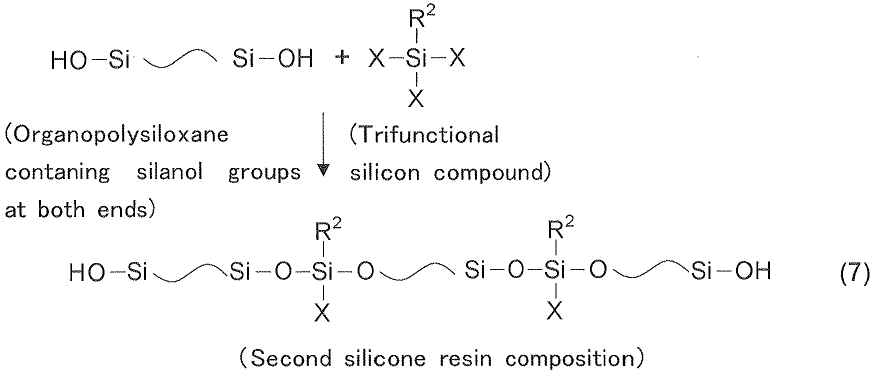 A portion in the silicon compound, to be specific, a portion in the trifunctional silicon compound is not subjected to condensation and remains to be subjected to condensation with a hydrosilyl group in the organohydrogenpolysiloxane to be described later by next further condensation (a complete curing step).

The second silicone resin composition is in a liquid state, to be specific, in an oil state (in a viscous liquid state). The viscosity (described in detail in Examples later) thereof under conditions of 25°C and one pressure is, for example, 100 to 100000 mPa·s, or preferably 1000 to 50000 mPa·s.

### <Third Silicone Resin Composition>

A third silicone resin composition contains the first silicone resin composition and/or the second silicone resin composition (hereinafter, may be simply referred to as a first/second silicone resin composition(s)), an organohydrogenpolysiloxane, and a hydrosilylation catalyst.

The organohydrogenpolysiloxane is an organosiloxane that contains, in one molecule, at least two hydrosilyl groups without containing an ethylenically unsaturated hydrocarbon group.

To be specific, examples of the organohydrogenpolysiloxane include an organopolysiloxane containing hydrogen atoms in its side chain and an organopolysiloxane containing hydrogen atoms at both ends.

The organopolysiloxane containing hydrogen atoms in its side chain is an organohydrogenpolysiloxane containing hydrogen atoms as a side chain that branches off from the main chain. Examples thereof include a methylhydrogenpolysiloxane, a dimethylpolysiloxane-co-methylhydrogenpolysiloxane, an ethylhydrogenpolysiloxane, and a methylhydrogenpolysiloxane-co-methylphenylpolysiloxane.

The number average molecular weight of the organopolysiloxane containing hydrogen atoms in its side chain is, for example, 100 to 1,000,000.

The organopolysiloxane containing hydrogen atoms at both ends is an organohydrogenpolysiloxane containing hydrogen atoms at both ends of the main chain. Examples thereof include a polydimethylsiloxane containing hydrosilyl groups at both ends, a polymethylphenylsiloxane containing hydrosilyl groups at both ends, and a polydiphenylsiloxane containing hydrosilyl groups at both ends.

The number average molecular weight of the organopolysiloxane containing hydrogen atoms at both ends is, for example, in view of stability and/or handling ability, 100 to 1,000,000, or preferably 100 to 100,000.

These organohydrogenpolysiloxanes can be used alone or in combination.

Of the organohydrogenpolysiloxanes, preferably, an organopolysiloxane containing hydrogen atoms in its side chain is used, or more preferably, a dimethylpolysiloxane-co-methylhydrogenpolysiloxane is used.

The viscosity of the organohydrogenpolysiloxane at 25°C is, for example, 10 to 100,000 mPa·s, or preferably 20 to 50,000 mPa·s. The viscosity of the organohydrogenpolysiloxane is measured with an E-type viscometer (type of rotor: 1"34' × R24, number of revolutions of 10 rpm).

A commercially available product can be used as the organohydrogenpolysiloxane. An organohydrogenpolysiloxane synthesized in accordance with a known method can be also used.

The mixing ratio of the organohydrogenpolysiloxane with respect to 100 parts by mass of the silicon compound in the first/second silicone resin composition(s) is, though depending on the molar ratio of the ethylenically unsaturated hydrocarbon group (R² in the above-described general formula (2)) in the first/second silicone resin composition(s) to the hydrosilyl group (a SiH group) in the organohydrogenpolysiloxane, for example, 10 to 10,000 parts by mass, or preferably 100 to 1,000 parts by mass.

The molar ratio (R²/SiH) of the ethylenically unsaturated hydrocarbon group (R² in the above-described general formula (2)) in the first/second silicone resin composition(s) to the hydrosilyl group (the SiH group) in the organohydrogenpolysiloxane is, for example, 20/1 to 0.05/1, preferably 20/1 to 0.1/1, more preferably 10/1 to 0.1/1, particularly preferably 10/1 to 0.2/1, or most preferably 5/1 to 0.2/1. The molar ratio thereof can be also set to be, for example, less than 1/1 and not less than 0.05/1.

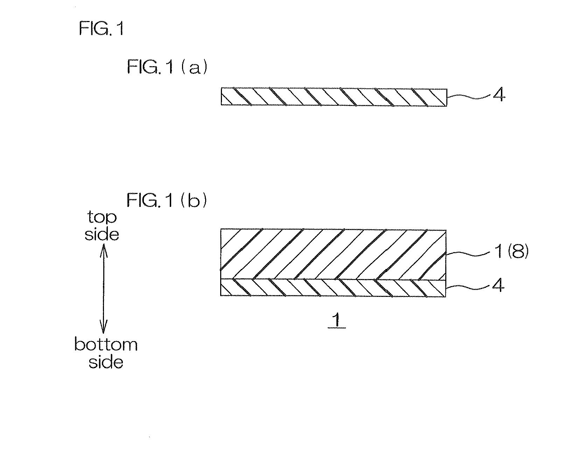

When the molar ratio is above 20/1, there may be a case where a semi-cured material having an appropriate toughness is not obtained when the third silicone resin composition is brought into a semi-cured state. On the other hand, when the molar ratio is below 0.05/1, there may be a case where the mixing proportion of the organohydrogenpolysiloxane is excessively large, so that the heat resistance and the toughness of an encapsulating sheet 1 (ref: FIG. 1 (b)) to be obtained become insufficient.

When the molar ratio is less than 1/1 and not less than 0.05/1, in allowing the third silicone resin composition to be brought into a semi-cured state, the third silicone resin composition can be quickly transferred into a semi-cured state, compared to the third silicone resin composition whose molar ratio is 20/1 to 1/1.

The hydrosilylation catalyst promotes a hydrosilylation addition reaction of the ethylenically unsaturated hydrocarbon group (R² in the above-described formula(s) (6) and/or (7)) in the first/second silicone resin composition(s) with a hydrosilanesilyl group in the organohydrogenpolysiloxane. An example of the hydrosilylation catalyst includes a transition element catalyst. To be specific, examples thereof include a platinum-based catalyst; a chromium-based catalyst (hexacarbonyl chromium (Cr(CO)₆ and the like); an iron-based catalyst (carbonyltriphenylphosphine iron (Fe(CO)PPh₃ and the like), tricarbonylbisphenylphosphine iron (trans-Fe(CO)₃(PPh₃)₂), polymer-substrate-(aryl-diphenylphosphine)5-n[carbonyl iron] (polymer substrate-(Ar-PPh₂)₅-n[Fe(CO)ₙ]), pentacarbonyl iron (Fe(CO)₅), and the like); a cobalt-based catalyst (tricarbonyltriethylsilylcobalt (Et₃SiCo(CO)₃), tetracarbonyltriphenylsilylcobalt (Ph₃SiCo(CO)₄), octacarbonylcobalt (Co₂(CO)₈), and the like); a molybdenum-based catalyst (hexacarbonylmolybdenum (Mo(CO)₆ and the like); a palladium-based catalyst; and a rhodium-based catalyst.

As the hydrosilylation catalyst, preferably, a platinum-based catalyst is used. Examples thereof include inorganic platinum such as platinum black, platinum chloride, and chloroplatinic acid and a platinum complex such as a platinum olefin complex, a platinum carbonyl complex, a platinum cyclopentadienyl complex, and a platinum acetylacetonate complex.

Preferably, in view of reactivity, a platinum complex is used, or more preferably, a platinum cyclopentadienyl complex and a platinum acetylacetonate complex are used.

Examples of the platinum cyclopentadienyl complex include trimethyl (methylcyclopentadienyl) platinum (IV) and a trimethyl (cyclopentadienyl) platinum (IV) complex.

An example of the platinum acetylacetonate complex includes 2,4-pentanedionato platinum (II) (platinum (II) acetylacetonate).

An example of the transition element catalyst can also include one described in the following document.

Document: ISSN 1070-3632, Russian Journal of General Chemistry, 2011, Vol.81, No.7, pp. 1480 to 1492, "Hydrosilylation on Photoactivated Catalysts", D.A. de Vekki

These addition catalysts can be used alone or in combination.

A commercially available product can be used as the addition catalyst. An addition catalyst synthesized in accordance with a known method can be also used.

The addition catalyst can be, for example, solved in a solvent to be prepared as an addition catalyst solution. The concentration of the addition catalyst in the addition catalyst solution is, for example, 1 to 99 mass %. When the addition catalyst is a transition element catalyst, the concentration of the transition element is adjusted to be, for example, 0.1 to 50 mass %. An example of the solvent includes the same solvent as that illustrated in the above-described condensation catalyst.

The mixing ratio of the addition catalyst with respect to 100 parts by mass of the total of the third silicone resin composition is, for example, 1.0 × 10⁻¹¹ to 0.5 parts by mass, or preferably, 1.0 × 10⁻⁹ to 0.1 parts by mass.

The addition catalyst can be also used in combination with a photoassistance agent such as a photoactive agent, a photoacid generator, and a photobase generator with an appropriate amount as required.

In order to prepare the above-described first to third silicone resin compositions, the first/second silicone resin composition(s), the organohydrogenpolysiloxane, and the hydrosilylation catalyst may be simultaneously blended or can be sequentially blended.

The third silicone resin composition prepared in this way is, for example, in a liquid state, to be specific, in an oil state (in a viscous liquid state). The viscosity thereof under conditions of 25°C and one pressure is, for example, 100 to 100000 mPa·s, or preferably 1000 to 50000 mPa·s.

The third silicone resin composition is prepared as a thermosetting silicone resin composition in an A-stage state.

### <First to Third Silicone Resin Compositions>

A filler and furthermore, an additive can be added to each of the above-described first to third silicone resin compositions at an appropriate proportion as required. Examples of the additive include an antioxidant, a modifier, a surfactant, a dye, a pigment, a discoloration inhibitor, an ultraviolet absorber, an anti-crepe hardening agent, a plasticizer, a thixotropic agent, and a fungicide. When the additive is blended in the first/second silicone resin composition(s), the additive can be blended in the condensation material in advance or the additive can be also blended in the first/second silicone resin composition(s) after the reaction.

Examples of the filler include silicon oxide (silica), aluminum oxide (alumina), titanium oxide, zirconium oxide, magnesium oxide, zinc oxide, iron oxide, aluminum hydroxide, calcium carbonate, layered mica, carbon black, diatomite, a glass fiber, silicone particles, an oxide phosphor (including an oxide phosphor activated by a lanthanoid element), an oxynitride phosphor (including an oxynitride phosphor activated by a lanthanoid element), a nitride phosphor (including a nitride phosphor activated by a lanthanoid element), a sulfide phosphor, and a silicate compound. As the filler, a filler to which surface treatment is applied with an organic silicon compound such as an organoalkoxysilane, an organochlorosilane, and an organosilazane is also used.

Preferably, an inorganic filler such as silica and a phosphor such as an oxide phosphor, an oxynitride phosphor, a nitride phosphor, and a sulfide phosphor are used.

As the phosphor, preferably, an oxide phosphor is used, or more preferably, a yellow phosphor such as Y₃Al₅O₁₂:Ce (YAG (yttrium aluminum garnet):Ce) and Tb₃Al₃O₁₂:Ce (TAG (terbium aluminum garnet):Ce) is used. Also, as the phosphor, preferably, an oxynitride phosphor is used, or more preferably, Ca-α-SiAlON (for example, α-SiAlON) is used.

The shape of the filler is not particularly limited and examples of the shape thereof include a sphere shape and a pulverized shape. The average particle size of the filler is, for example, 70 µm or less, or preferably, in view of strength, 0.1 nm to 50 µm.

The mixing ratio of the filler with respect to 100 parts by mass of the total amount of the first to third silicone resin compositions and the organohydrogenpolysiloxane is, in view of improving elastic modulus and in view of light transmission properties, for example, 5 to 80 parts by mass.

### <Function and Effect of First to Third Silicone Resin Compositions>

In the first and the second silicone resin compositions of the present invention, the density of the siloxane bond formed by the condensation reaction is adjusted to be relatively low, so that the gelation caused by the excessive increase in the density of the bond described above can be prevented.

When the organohydrogenpolysiloxane and the hydrosilylation catalyst are blended after a long elapse of time since the preparation of the first and the second silicone resin compositions of the present invention, the thickening of the third silicone resin composition immediately after the blending thereof can be suppressed.

As a result, the handling ability of the first to third silicone resin compositions can be improved.

The obtained third silicone resin composition can be semi-cured to produce a silicone semi-cured material (a semi-cured material sheet or the like). Furthermore, the silicone semi-cured material can be completely cured to produce a silicone cured material (a cured material sheet or the like).

The semi-cured material sheet and the cured material sheet have excellent light resistance and heat resistance. Thus, the semi-cured material sheet and the cured material sheet can be used for various uses. The semi-cured material sheet and the cured material sheet have, among all, excellent transparency, so that they can be used as an encapsulating sheet for optical uses, or more preferably, as an encapsulating sheet of a light emitting diode element.

<Encapsulating Sheet and Light Emitting Diode Device>

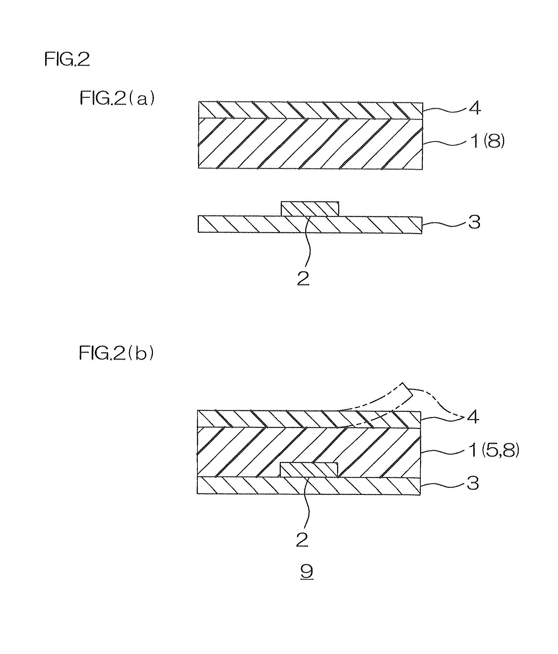

FIG. 1 shows process drawings for preparing an encapsulating sheet obtained from one embodiment of a third silicone resin composition of the present invention: FIG. 1 (a) illustrating a step of preparing a release sheet and FIG. 1 (b) illustrating a step of forming the encapsulating sheet. FIG. 2 shows process drawings for illustrating a method for encapsulating a light emitting diode element using the encapsulating sheet shown in FIG. 1 (b): FIG. 2 (a) illustrating a step of disposing the encapsulating sheet in opposed relation to a board and FIG. 2 (b) illustrating a step of encapsulating the light emitting diode element by the encapsulating sheet.

Next, a method for producing a light emitting diode device 9 using the encapsulating sheet 1 made of a semi-cured material sheet 8 that is prepared from the third silicone resin composition is described with reference to FIGS. 1 and 2.

First, in this method, as shown in FIGS. 1 (a) and 1 (b), the encapsulating sheet 1 is prepared.

In order to prepare the encapsulating sheet 1, first, as shown in FIG. 1 (a), a release sheet 4 is prepared.

Examples of the release sheet 4 include a polymer film such as a polyethylene film and a polyester film, a ceramic sheet, and a metal foil. Preferably, a polymer film is used. Release treatment such as fluorine treatment can be also applied to the surface of the release sheet.

Next, as shown in FIG. 1 (b), the third silicone resin composition is applied to the surface of the release sheet 4 to form a film and subsequently, the film is heated under the below-described heating conditions, so that the semi-cured material sheet 8 is formed.

In the application of the third silicone resin composition, for example, a casting, a spin coating, or a roll coating is used.

The thickness of the film is, for example, 10 to 5000 µm, or preferably 100 to 2000 µm.

The heating conditions are as follows: a heating temperature of, for example, 40 to 180°C, or preferably 60 to 150°C and a heating duration of, for example, 0.1 to 180 minutes, or preferably 0.1 to 60 minutes.

When the heating conditions are within the above-described range, for example, a solvent including water or the like is surely removed to terminate a condensation reaction, so that the third silicone resin composition can be brought into a semi-cured state (a B-stage state).

In this way, the third silicone resin composition is semi-cured, so that a semi-cured material in a sheet shape, that is, the semi-cured material sheet 8 can be obtained (a semi-curing step).

The thickness of the semi-cured material sheet 8 is, for example, 10 to 5000 µm, or preferably 100 to 2000 µm.

In the semi-curing step, a reactive functional group (the SiX group in the above-described formula(s) (6) and/or (7)) in the third silicone resin composition in an A-stage state is subjected to condensation by heating. In this way, the third silicone resin composition is gelated. That is, the third silicone resin composition is brought into a semi-cured state (a B-stage state), so that the semi-cured material sheet 8 is obtained.

In this way, as shown in FIG. 1 (b), the encapsulating sheet 1 including the semi-cured material sheet 8 is prepared.

The thickness of the encapsulating sheet 1 is, for example, 10 to 5000 µm, or preferably 100 to 2000 µm.

Next, as shown in FIG. 2 (a), a board 3 mounted with a light emitting diode element 2 is prepared.

The board 3 is formed into a generally flat plate shape. To be specific, the board 3 is formed of a laminated board in which a conductive layer (not shown) including an electrode pad (not shown) and a wire (not shown), as a circuit pattern, is laminated on an insulating board. The insulating board is, for example, formed of a silicon board, a ceramic board, or a polyimide resin board. Preferably, the insulating board is formed of a ceramic board, to be specific, a sapphire (Al₂O₃) board.

The conductive layer is formed of a conductor such as gold, copper, silver, or nickel. The thickness of the board 3 is, for example, 30 to 1500 µm, or preferably 500 to 1000 µm.

The light emitting diode element 2 is provided on the surface of the board 3 and is formed into a generally rectangular shape in sectional view. The light emitting diode element 2 is flip-chip mounting connected or wire bonding connected to an electrode pad in the board 3 to be electrically connected to the electrode pad. The light emitting diode element 2 is an element that emits blue light.

Next, as shown in FIG. 2 (a), the top and the bottom of the encapsulating sheet 1 shown in FIG. 1 (b) are reversed to be disposed in opposed relation to the top side of the board 3.

Next, as shown in FIG. 2 (b), the light emitting diode element 2 is embedded by the encapsulating sheet 1.

To be specific, the encapsulating sheet 1 is compressively bonded to the board 3.

The pressure in the compressive bonding is, for example, 0.1 to 10 MPa, or preferably 0.5 to 5 MPa.

The surface of the light emitting diode element 2 is covered with the encapsulating sheet 1 by the compressive bonding. A portion on the surface of the board 3 that is exposed from the light emitting diode element 2 is covered with the encapsulating sheet 1.

Thereafter, the encapsulating sheet 1 is completely cured.

Examples of a method for completely curing the encapsulating sheet 1 include a method in which an active energy ray is applied to the encapsulating sheet 1 and a method in which the encapsulating sheet 1 is heated. These methods can be performed alone or in combination.

In the method in which the active energy ray is applied to the encapsulating sheet 1, examples of the active energy ray include an ultraviolet ray and an electron beam. An example of the active energy ray also includes an active energy ray having a spectral distribution in a wavelength region of, for example, 180 to 460 nm, or preferably 200 to 400 nm.

In the application of the active energy ray, an application device is used. Examples thereof include a chemical lamp, an excimer laser, a black light, a mercury arc, a carbon arc, a low pressure mercury lamp, a medium pressure mercury lamp, a high pressure mercury lamp, an extra-high pressure mercury lamp, and a metal halide lamp. Also, an example thereof includes an application device capable of generating an active energy ray that is in the longer wavelength side or in the shorter wavelength side than in the above-described wavelength region.

The amount of irradiation is, for example, 0.001 to 100 J/cm², or preferably 0.01 to 10 J/cm². Preferably, in view of suppressing the amount of irradiation so as to suppress a damage to the light emitting diode element 2 and/or the board 3 caused by the excessive application of the active energy ray, the amount of irradiation is 0.01 to 10 J/cm².

In the method for heating the encapsulating sheet 1, the heating temperature is, for example, 50 to 250°C, or preferably 100 to 200°C and the heating duration is, for example, 0.1 to 1440 minutes, or preferably 1 to 180 minutes.

In this way, the encapsulating sheet 1 is formed as an encapsulating layer 5 that encapsulates the light emitting diode element 2.

In this way, the light emitting diode device 9 in which the light emitting diode element 2 is encapsulated by the encapsulating layer 5 is obtained.

Thereafter, as shown by phantom lines in FIG. 2 (b), the release sheet 4 is peeled from the encapsulating sheet 1 as required.

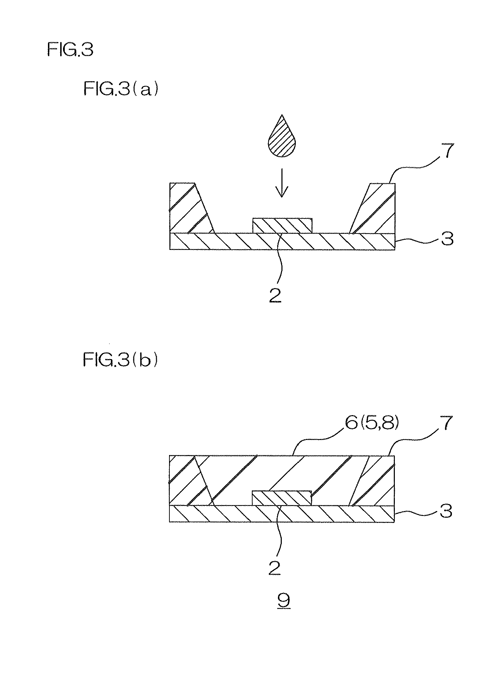

FIG. 3 shows process drawings for illustrating a method for encapsulating a light emitting diode element using one embodiment of a third silicone resin composition of the present invention: FIG. 3 (a) illustrating a step of preparing a board provided with a reflector and FIG. 3 (b) illustrating a step of potting the third silicone resin composition into the reflector to be subsequently semi-cured and completely cured to encapsulate the light emitting diode element by an encapsulating layer.

In each figure to be described below, the same reference numerals are provided for members corresponding to each of those described above, and their detailed description is omitted.

In the embodiments in FIGS. 1 and 2, first, the encapsulating sheet 1 in a B-stage state is prepared and thereafter, the light emitting diode element 2 is embedded by the encapsulating sheet 1. Alternatively, for example, as shown in FIGS. 3 (a) and 3 (b), the liquid third silicone resin composition in an A-stage state is potted with respect to the light emitting diode element 2 and thereafter, the silicone resin composition can be also semi-cured (brought into a B-stage state).

To be specific, in the embodiment in FIG. 3, first, as shown in FIG. 3 (a), the board 3 that is provided with a reflector 7 is prepared.

The reflector 7 is provided so as to surround the light emitting diode element 2 and is formed into a generally rectangular frame shape or a generally ring shape (a circular ring shape or an elliptical ring shape) having its center open in plane view. The reflector 7 is also formed into a generally trapezoidal shape in which its width is gradually reduced toward the upper side in sectional view. The reflector 7 is disposed at the outer side of the light emitting diode element 2 at spaced intervals thereto. In this way, the light emitting diode element 2 is disposed in the reflector 7.

Next, as shown by an arrow in FIG. 3 (a), and in FIG. 3 (b), the liquid third silicone resin composition in an A-stage state is potted into the reflector 7. To be specific, the third silicone resin composition is potted thereinto so that the liquid surface of the silicone resin composition is generally flush with the upper surface of the reflector 7 in the thickness direction.

Next, the third silicone resin composition is semi-cured by heating. The heating conditions are the same as the above-described heating conditions.

In this way, a semi-cured layer 6 made of a silicone semi-cured material corresponding to the shape of the inner surface of the reflector 7, the surfaces of the light emitting diode element 2, and the surface of the board 3, which is exposed from the reflector 7 and the light emitting diode element 2, is formed.

Thereafter, the active energy ray is applied to the semi-cured layer 6 to be completely cured. The irradiation conditions are the same as the above-described irradiation conditions.

In this way, the encapsulating layer 5 that encapsulates the light emitting diode element 2 and is made of a silicone cured material is formed.

In the embodiment in FIG. 3, the same function and effect as those of the embodiments in FIGS. 1 and 2 can be achieved.

In the embodiment in FIG. 3, the third silicone resin composition is potted into the reflector 7 without preparing the encapsulating sheet 1 that includes the release sheet 4, so that the step of preparing the release sheet 4 (ref: FIG. 1 (a)) can be omitted.

On the other hand, in the embodiments in FIGS. 1 and 2, the light emitting diode element 2 is embedded by the encapsulating sheet 1, so that the light emitting diode element 2 in the board 3 that is not provided with the reflector 7 (ref: FIG. 3 (a)) can be easily encapsulated.

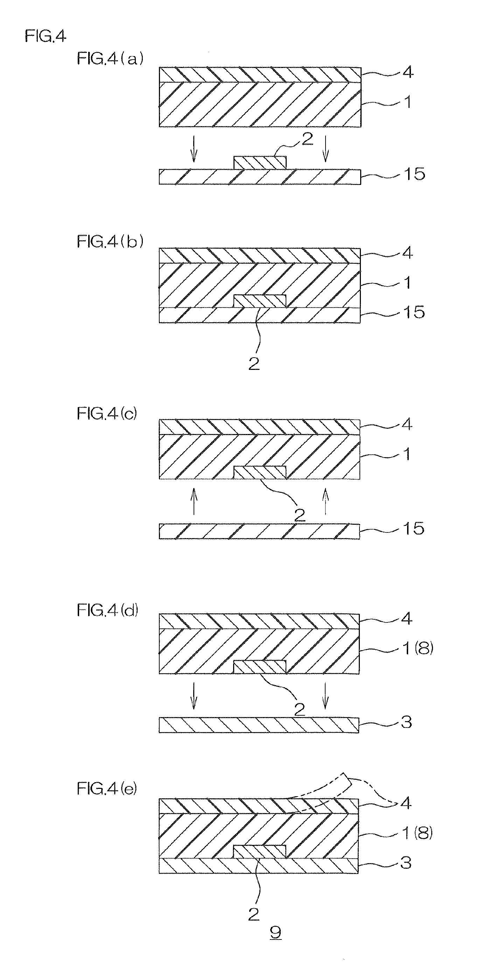

FIG. 4 shows process drawings for illustrating a method for encapsulating a light emitting diode element using an encapsulating sheet obtained from one embodiment of a third silicone resin composition of the present invention: FIG. 4 (a) illustrating a step of preparing the light emitting diode element supported by a support, FIG. 4 (b) illustrating a step of encapsulating the light emitting diode element by the encapsulating sheet, FIG. 4 (c) illustrating a step of peeling the encapsulating sheet and the light emitting diode element from the support, FIG. 4 (d) illustrating a step of disposing the encapsulating sheet and the light emitting diode element in opposed relation to a board, and FIG. 4 (e) illustrating a step of mounting the light emitting diode element on the board.

In the above-described embodiments in FIGS. 2 and 3, first, the light emitting diode element 2 is prepared on the board 3 in advance to be thereafter encapsulated by the encapsulating sheet 1 or the third silicone resin composition. Alternatively, as shown in FIG. 4, for example, first, the light emitting diode element 2 that is supported by a support 15 is prepared. Next, the light emitting diode element 2 is encapsulated by the encapsulating sheet 1 and then, the encapsulating sheet 1 and the light emitting diode element 2 are peeled from the support 15. Thereafter, the light emitting diode element 2 can be mounted on the board 3.

In this method, first, as shown in FIG. 4 (a), the light emitting diode element 2 that is supported by the support 15 is prepared.

An example of the support 15 includes a support sheet made of the same material as that of the release sheet 4. The thickness of the support 15 is, for example, 100 to 5000 µm, or preferably 300 to 2000 µm.

Next, as shown in FIG. 4 (b), the light emitting diode element 2 that is supported by the support 15 is embedded by the encapsulating sheet 1. To be specific, the encapsulating sheet 1 is compressively bonded to the support 15.

Subsequently, the encapsulating sheet 1 is completely cured. In this way, the light emitting diode element 2 is encapsulated by the encapsulating sheet 1.

Next, as shown in FIG. 4 (c), the light emitting diode element 2 and the encapsulating sheet 1 are peeled from the support 15.

Next, as shown by the arrows in FIG. 4 (d), and in FIG. 4 (e), the light emitting diode element 2 that is encapsulated by the encapsulating sheet 1 is mounted on the board 3.

In this way, the light emitting diode device 9 including the light emitting diode element 2 that is encapsulated by the encapsulating sheet 1 and is mounted on the board 3 is obtained.

Thereafter, as shown by the phantom lines in FIG. 4 (e), the release sheet 4 is peeled from the encapsulating sheet 1 as required.

### Examples

While the present invention will be described hereinafter in further detail with reference to Examples and Comparative Examples, the present invention is not limited to these Examples and Comparative Examples.

Example 1

(Preparation of First Silicone Resin Composition)
(Use of Trifunctional Silicon Compound and Bifunctional Silicon Compound in Combination (70/30 in Molar Ratio), Heated and Stirred after Blending of Tin-Based Catalyst)

After 100 g (8.70 mmol) of an organopolysiloxane containing silanol groups at both ends (manufactured by Shin-Etsu Chemical Co., Ltd., a polydimethylsiloxane containing silanol groups at both ends, a number average molecular weight of 11,500, the viscosity (at 25°C) of 1000 mPa·s); 0.60 g [4.1 mmol, the molar ratio (SiOH/methoxy group) of the SiOH group in the organopolysiloxane containing silanol groups at both ends to the methoxy group in the vinyltrimethoxysilane = 1/0.7] of a vinyltrimethoxysilane (manufactured by Shin-Etsu Chemical Co., Ltd.); and 0.35 g [2.6 mmol, the molar ratio (SiOH/methoxy group) of the SiOH group in the organopolysiloxane containing silanol groups at both ends to the methoxy group in the vinyldimethoxymethylsilane = 1/0.3] of a vinyldimethoxymethylsilane (manufactured by Tokyo Chemical Industry Co., Ltd.) were stirred and mixed, 0.074 g (0.17 mmol, 2.0 mol with respect to 100 mol of the organopolysiloxane containing silanol groups at both ends) of 2-ethylhexanoate tin (a concentration of 95 mass %) as a condensation catalyst was added thereto to be stirred at 70°C. The obtained mixture was gelated during a condensation reaction, so that a transparent and gelled first silicone resin composition was obtained.

Example 2

(Preparation of First and Third Silicone Resin Compositions)

(Use of Trifunctional Silicon Compound and Bifunctional Silicon Compound in Combination (50/50 in Molar Ratio), Stirred at Room Temperature after Blending of Tin-Based Catalyst)

After 100 g (8.70 mmol) of an organopolysiloxane containing silanol groups at both ends (manufactured by Shin-Etsu Chemical Co., Ltd., a polydimethylsiloxane containing silanol groups at both ends, a number average molecular weight of 11,500, the viscosity (at 25°C) of 1000 mPa·s); 0.43 g [2.9 mmol, the molar ratio (SiOH/methoxy group) of the SiOH group in the organopolysiloxane containing silanol groups at both ends to the methoxy group in the vinyltrimethoxysilane = 1/0.5] of a vinyltrimethoxysilane (manufactured by Shin-Etsu Chemical Co., Ltd.); and 0.58 g [4.3 mmol, the molar ratio (SiOH/methoxy group) of the SiOH group in the organopolysiloxane containing silanol groups at both ends to the methoxy group in the vinyldimethoxymethylsilane = 1/0.5] of a vinyldimethoxymethylsilane (manufactured by Tokyo Chemical Industry Co., Ltd.) were stirred and mixed, 0.074 g (0.17 mmol, 2.0 mol with respect to 100 mol of the organopolysiloxane containing silanol groups at both ends) of 2-ethylhexanoate tin (a concentration of 95 mass %) as a condensation catalyst was added thereto to be stirred at room temperature (at 25°C) for two hours. In this way, a first silicone resin composition in an oil state was prepared.

Thereafter, the first silicone resin composition was cooled to room temperature (at 25°C) and 2.4 g [the molar ratio (vinyl group/SiH) of the vinyl group in the vinyltrimethoxysilane to the SiH group in the organohydrogenpolysiloxane = 1/3] of an organohydrogenpolysiloxane (manufactured by Shin-Etsu Chemical Co., Ltd., a polydimethylsiloxane containing hydrosilyl groups at both ends, the viscosity (at 25°C) of 100 mPa·s) and 0.075 mL (15 ppm to the total of the third silicone resin composition) of a solution of trimethyl (methylcyclopentadienyl) platinum (IV) (a platinum concentration of 2 mass %) as a hydrosilylation catalyst were added to the first silicone resin composition, so that a transparent third silicone resin composition in an oil state was obtained.

Example 3

(Preparation of First and Third Silicone Resin Compositions)

(Use of Trifunctional Silicon Compound and Bifunctional Silicon Compound in Combination (50/50 in Molar Ratio), Heated and Stirred after Blending of Tin-Based Catalyst)

After 100 g (8.70 mmol) of an organopolysiloxane containing silanol groups at both ends (manufactured by Shin-Etsu Chemical Co., Ltd., a polydimethylsiloxane containing silanol groups at both ends, a number average molecular weight of 11,500, the viscosity (at 25°C) of 1000 mPa·s); 0.43 g [2.9 mmol, the molar ratio (SiOH/methoxy group) of the SiOH group in the organopolysiloxane containing silanol groups at both ends to the methoxy group in the vinyltrimethoxysilane = 1/0.5] of a vinyltrimethoxysilane (manufactured by Shin-Etsu Chemical Co., Ltd.); and 0.58 g [4.3 mmol, the molar ratio (SiOH/methoxy group) of the SiOH group in the organopolysiloxane containing silanol groups at both ends to the methoxy group in the vinyldimethoxymethylsilane = 1/0.5] of a vinyldimethoxymethylsilane (manufactured by Tokyo Chemical Industry Co., Ltd.) were stirred and mixed, 0.074 g (0.17 mmol, 2.0 mol with respect to 100 mol of the organopolysiloxane containing silanol groups at both ends) of 2-ethylhexanoate tin (a concentration of 95 mass %) as a condensation catalyst was added thereto to be stirred at 70°C for two hours. In this way, a first silicone resin composition in an oil state was prepared.

Thereafter, the first silicone resin composition was cooled to room temperature (at 25°C) and 2.4 g [the molar ratio (vinyl group/SiH) of the vinyl group in the vinyltrimethoxysilane to the SiH group in the organohydrogenpolysiloxane = 1/3] of an organohydrogenpolysiloxane (manufactured by Shin-Etsu Chemical Co., Ltd., a polydimethylsiloxane containing hydrosilyl groups at both ends, the viscosity (at 25°C) of 100 mPa·s) and 0.075 mL (15 ppm to the total of the third silicone resin composition) of a solution of trimethyl (methylcyclopentadienyl) platinum (IV) (a platinum concentration of 2 mass %) as a hydrosilylation catalyst were added to the first silicone resin composition, so that a transparent third silicone resin composition in an oil state was obtained.

Example 4

(Preparation of First and Third Silicone Resin Compositions)

(Use of Trifunctional Silicon Compound and Bifunctional Silicon Compound in Combination (50/50 in Molar Ratio), Heated and Stirred after Blending of TMAH)

A transparent third silicone resin composition in an oil state was obtained in the same manner as in Example 3, except that 0.159 g (0.17 mmol, 2.0 mol with respect to 100 mol of the organopolysiloxane containing silanol groups at both ends) of tetramethylammonium hydroxide (a concentration of 10 mass % in methanol) as a condensation catalyst was added instead of 0.074 g of 2-ethylhexanoate tin (a concentration of 95 mass %).

Comparative Example 1

(Preparation of Second and Third Silicone Resin Compositions)

(Use of Trifunctional Silicon Compound Alone, Stirred at Room Temperature after Blending of TMAH)

After 100 g (8.70 mmol) of an organopolysiloxane containing silanol groups at both ends (manufactured by Shin-Etsu Chemical Co., Ltd., a polydimethylsiloxane containing silanol groups at both ends, a number average molecular weight of 11,500, the viscosity (at 25°C) of 1000 mPa·s) and 0.86 g [5.80 mmol, the molar ratio (SiOH/methoxy group) of the SiOH group in the organopolysiloxane containing silanol groups at both ends to the methoxy group in the vinyltrimethoxysilane = 1/1] of a vinyltrimethoxysilane (manufactured by Shin-Etsu Chemical Co., Ltd.) were stirred and mixed, 0.159 g (0.17 mmol, 2.0 mol with respect to 100 mol of the organopolysiloxane containing silanol groups at both ends) of tetramethylammonium hydroxide (a methanol solution with a concentration of 10 mass %) as a condensation catalyst was added thereto to be stirred at room temperature (at 25°C) for two hours. In this way, a second silicone resin composition in an oil state was prepared.

Thereafter, 2.4 g [the molar ratio (vinyl group/SiH) of the vinyl group in the vinyltrimethoxysilane to the SiH group in the organohydrogenpolysiloxane = 1/3] of an organohydrogenpolysiloxane (manufactured by Shin-Etsu Chemical Co., Ltd., a polydimethylsiloxane containing hydrosilyl groups at both ends, the viscosity (at 25°C) of 100 mPa·s) and 0.075 mL (15 ppm to the total of the third silicone resin composition) of an oligosiloxane solution of a platinum carbonyl complex (a platinum concentration of 2 mass %) as a hydrosilylation catalyst were added to the second silicone resin composition, so that a third silicone resin composition in an oil state was obtained.

Comparative Example 2

(Preparation of Second and Third Silicone Resin Compositions)

(Use of Trifunctional Silicon Compound Alone, Heated and Stirred after Blending of TMAH)

A second silicone resin composition was prepared in the same manner as in Comparative Example 1, except that the reaction temperature in the preparation of the second silicone resin composition was changed from room temperature (25°C) to 70°C. Thereafter, the preparation of a third silicone resin composition was attempted.

However, the obtained mixture was gelated during a condensation reaction and a transparent and gelled second silicone resin composition was obtained.

Thus, the third silicone resin composition was not capable of being prepared.

Comparative Example 3

(Preparation of Second and Third Silicone Resin Compositions)

(Use of Trifunctional Silicon Compound Alone, Heated and Stirred after Blending of Tin-Based Catalyst)

The same operation was performed as in Comparative Example 2, except that the condensation catalyst was changed from 0.159 g of tetramethylammonium hydroxide (a methanol solution with a concentration of 10 mass %) to 0.074 g (0.17 mmol, 2.0 mol with respect to 100 mol of the organopolysiloxane containing silanol groups at both ends) of 2-ethylhexanoate tin (a concentration of 95 mass %).

As a result, the obtained mixture was gelated during a condensation reaction and a transparent and gelled second silicone resin composition was obtained.

Thus, a third silicone resin composition was not capable of being prepared.

### <Evaluation>

The properties of Examples and Comparative Examples were evaluated in accordance with the following tests. The results are shown in Table 1.

### Evaluation 1

### (Duration of Gelation)

Each of the first silicone resin compositions in Examples and each of the second silicone resin compositions in Comparative Examples were added dropwise to a hot plate at 135°C to be heated, so that a duration required for gelation (that is, semi-curing) was measured.

A silicone resin composition that was not gelated after the elapse of two hours (120 minutes) since the heating is considered to have a duration of gelation of above 120 minutes. The results are shown as "above 120" in Table.

### Evaluation 2

### (Reaction Rate)

The reaction rate (the reaction rate in the condensation reaction) was calculated from reduction rate of methoxy based on 1H-NMR at the initial stage in the reaction (before the adding of the condensation catalyst) and after two hours of the condensation reaction (or, if a resin was gelated, the resin immediately before the gelation).

### Evaluation 3

### (Viscosity)

The viscosity of the first/second silicone resin composition(s) (the composition(s) after being stirred for two hours) and the third silicone resin compositions (the compositions immediately after the blending of the hydrosilylation catalyst) in Examples 2 to 4 and Comparative Example 1 was measured under conditions of 25°C and one pressure using a rheometer.

In the measurement of the viscosity, the temperature of the first to third silicone resin compositions was adjusted to be 25°C; the number of revolutions was 99 s⁻¹; and an E-type was used as a cone in the rheometer.

### Evaluation 4

### (Number Average Molecular Weight)

The number average molecular weight of the organopolysiloxane containing silanol groups at both ends and the organohydrogenpolysiloxane was measured with a GPC to be calculated based on a calibration curve of standard polystyrene.
The measurement conditions are shown in the following.

Device: Shodex-GPC101 (manufactured by SHOWA DENKO K.K.)
Column: KF800
Column Temperature: 40°C
Flow Rate: 1 mL/min
Mobile Phase: Toluene
Sample Concentration: 0.2 mass%
Injection Rate: 20 µl
Detector: UV (254 nm)

**Table 1**

| | | Ex. 1 | Ex. 2 | Ex. 3 | Ex. 4 | Comp. Ex. 1 | Comp. Ex. 2 | Comp. Ex. 3 |
|---|---|---|---|---|---|---|---|---|
| Silicon Compound | Trifunctional : Bifunctional (Molar Ratio) | 70:30 | 50:50 | 50:50 | 50:50 | 100:0 | 100:0 | 100:0 |
| Condensation Catalyst | | Sn-Based | Sn-Based | Sn-Based | TMAH | TMAH | TMAH | Sn-Based |
| Reaction Temperature (°C) [Condensation Reaction] | | 70 | 25 | 70 | 70 | 25 | 70 | 70 |
| Hydrosilylation Catalyst | | Trimethyl (Methylcyclopentadienyl)Pt | | | | Pt-Carbonyl Complex | | |
| Duration of Gelation (min) | | 90 | Above 120 | Above 120 | Above 120 | Above 120 | 17 | 27 |
| Reaction Rate Immediately Before Gelation (%) | | 80 | - | - | - | - | 62 | 60 |
| Reaction Rate after Elapse of Two Hours Since Adding of Hydrosilylation Catalyst (%) | | -*1 | 40 | 80 | 70 | 60 | -*1 | -*1 |
| Viscosity before Adding of Organohydrogenpolysiloxane (mPa·s) | | - | 1,000 | 13,000 | 7,418 | 1,350 | - | - |
| Viscosity after Adding of Organohydrogenpolysiloxane (mPa·s) | | - | 700 | 12,000 | 17,000 | 6,300 | - | - |

| | | | | | | | | |
|---|---|---|---|---|---|---|---|---|
| *1: Incapable of being measured because of gelation | | | | | | | | |

## Claims

1. A first silicone resin composition prepared by allowing an organopolysiloxane containing silanol groups at both ends containing silanol groups at both ends of a molecule and a silicon compound containing, in one molecule, at least two leaving groups leaving by a condensation reaction with the silanol groups to undergo the condensation reaction in the presence of a condensation catalyst, wherein
the silicon compound comprises:
a trifunctional silicon compound containing, in one molecule, the three leaving groups
and
a bifunctional silicon compound containing, in one molecule, the two leaving groups.

2. The first silicone resin composition according to claim 1, wherein
the molar ratio of the leaving group in the trifunctional silicon compound to the leaving group in the bifunctional silicon compound is 30/70 to 90/10.

3. The first silicone resin composition according to claim 1 or 2, wherein
the condensation catalyst is a tin-based catalyst.

4. The first silicone resin composition according to claim 1, 2 or 3, wherein
the trifunctional silicon compound and/or the bifunctional silicon compound further contain(s), in one molecule, at least one monovalent ethylenically unsaturated hydrocarbon group.

5. A second silicone resin composition prepared by allowing an organopolysiloxane containing silanol groups at both ends containing silanol groups at both ends of a molecule and a silicon compound containing, in one molecule, at least two leaving groups leaving by a condensation reaction with the silanol groups to undergo the condensation reaction in the presence of a condensation catalyst, wherein
the number average molecular weight of the organopolysiloxane containing silanol groups at both ends is 20,000 or more and 50,000 or less.

6. The second silicone resin composition according to claim 5, wherein
the condensation catalyst is a tin-based catalvst.

7. The second silicone resin composition according to claim 5 or 6, wherein
the silicon compound further contains, in one molecule, at least one monovalent ethylenically unsaturated hydrocarbon group.

8. A third silicone resin composition comprising:
a first silicone resin composition and/or a second silicone resin composition, an organohydrogenpolysiloxane, and a hydrosilylation catalyst, wherein
the first silicone resin composition is prepared by
allowing an organopolysiloxane containing silanol groups at both ends containing silanol groups at both ends of a molecule and a silicon compound containing, in one molecule, at least two leaving groups leaving by a condensation reaction with the silanol groups to undergo the condensation reaction in the presence of a condensation catalyst; and
the silicon compound comprises:
a trifunctional silicon compound containing, in one molecule, the three leaving groups
and
a bifunctional silicon compound containing, in one molecule, the two leaving groups
and
the second silicone resin composition is prepared by
allowing an organopolysiloxane containing silanol groups at both ends containing silanol groups at both ends of a molecule and a silicon compound containing, in one molecule, at least two leaving groups leaving by a condensation reaction with the silanol groups to undergo the condensation reaction in the presence of a condensation catalyst; and
the number average molecular weight of the organopolysiloxane containing silanol groups at both ends is 20,000 or more and 50,000 or less.
